# EUROPÄISCHE PATENTSCHRIFT

(11) **EP 2 669 480 B1**
(45) Veröffentlichungstag und Bekanntmachung des Hinweises auf die Patenterteilung: **17.10.2018**
(21) Anmeldenummer: 13166469.0
(22) Anmeldetag: 03.05.2013
(51) Int. Cl.: F01K 13/02, F22B 1/00, F01D 17/08, F01D 11/04, F01D 11/06, F03G 6/06, F01D 19/00, F01D 19/02, F01D 25/08, F01D 25/10, F01D 25/22, F01K 3/22, F01K 7/22, F01K 7/24, F01K 7/40, F01K 17/04, F01K 25/08, F22B 35/14, G01F 1/90, F24S 20/20

(54) **Verfahren zum Betreiben einer Solaranlage**
Method for operating a solar energy system
Procédé destiné à l'exploitation d'une installation solaire

(30) Priorität: 31.05.2012 DE 102012209139
(43) Veröffentlichungstag der Anmeldung: 04.12.2013
(73) Patentinhaber: MAN Diesel & Turbo SE, 86153 Augsburg (DE)
(72) Erfinder: Schaake, Thomas, 21220 Seevetal (DE); Morgenstern, Stefan, 21465 Reinbek (DE); Bösch, Heinz-Hugo, 21244 Buchholz (DE)

(56) Entgegenhaltungen:
- EP-A2- 0 316 806
- DE-A1- 10 221 594
- DE-A1-102009 060 089
- DE-C1- 4 340 340
- US-B2- 7 028 479
- WENDELBERGER K ET AL: "BETRIEBSVERHALTEN EINES 600-MW-KOHLEBLOCKES IN LEISTUNGSREGELUNG", VGB KRAFTWERKSTECHNIK, VGB KRAFTWERKSTECHNIK GMBH. ESSEN, DE, Bd. 80, Nr. 3, 1. Januar 2000 (2000-01-01) , Seiten 36-39, XP000898623, ISSN: 0372-5715
- SINDELAR R: "GEWAEHRLEISTUNG DER SEKUNDENDYNAMIK EINES DAMPFKRAFTWERKSBLOCKES", VGB KRAFTWERKSTECHNIK, VGB KRAFTWERKSTECHNIK GMBH. ESSEN, DE, Bd. 71, Nr. 1, 1. Januar 1991 (1991-01-01) , Seiten 4-13, XP000178871, ISSN: 0372-5715

## Beschreibung

Die Erfindung betrifft ein Verfahren zum Betreiben einer Solaranlage nach dem Oberbegriff des Anspruchs 1. Eine solche Solaranlage ist zum Beispiel in dem Dokument DE102009060089 A1 offenbart. In einer Solaranlage wird aus Solarenergie elektrische Energie erzeugt. Hierzu wird in einem Solarfeld der Solaranlage ein Arbeitsmedium, insbesondere Wasser, verdampft und das verdampfte Arbeitsmedium einer Turbine zugeführt. In der Turbine wird das Arbeitsmedium entspannt und hierbei gewonnene Energie zum Antreiben eines Generators der Solaranlage genutzt, wobei der Generator elektrische Energie erzeugt. Der in dem Solarfeld erzeugte Dampf des Arbeitsmediums, welcher der Turbine zugeführt wird, wird auch als Frischdampf bezeichnet.

Die vorliegende Erfindung betrifft ein Verfahren zum Betreiben einer solchen Solaranlage, deren Solarfeld nach dem Prinzip der Direktverdampfung arbeitet, bei welchem also das Arbeitsmedium in einem Kreislauf für dasselbe einerseits im Solarfeld verdampft und andererseits in der Turbine entspannt wird.

Dann, wenn eine Solaranlage zum Beispiel infolge einer Beschattung des Solarfelds der Solaranlage nicht in Volllast sondern nur in Teillast betrieben werden kann, ist bislang ein wirkungsgradoptimierter Betrieb der Solaranlage nicht möglich.

Es besteht Bedarf an einer Solaranlage, die sowohl unter Volllast als auch unter Teillast wirkungsgradoptimal betrieben werden kann.

Hiervon ausgehend liegt der vorliegenden Erfindung die Aufgabe zugrunde, ein neuartiges Verfahren zum Betreiben einer Solaranlage zu schaffen.
Diese Aufgabe wird durch ein Verfahren zum Betreiben einer Solaranlage nach Anspruch 1 gelöst. Erfindungsgemäß wird dann, wenn infolge einer Beschattung des Solarfeldes in demselben weniger Frischdampf erzeugt wird, die Turbine derart wirkungsgradoptimal betrieben, dass das oder jedes Ventil, über welches die Menge des der Turbine zugeleiteten Frischdampfs eingestellt wird, derart geregelt, dass ein Istwert eines sich stromaufwärts der Turbine einstellenden Frischdampfdrucks einem Sollwert folgt, der abhängig von einer Frischdampftemperatur des Frischdampfs stromaufwärts der Turbine ermittelt wird.

Mit der vorliegenden Erfindung wird erstmals vorgeschlagen, das oder jedes Ventil, über welches die Menge des der Turbine zugeleiteten Frischdampfs eingestellt wird, derart zu regeln, dass ein Istwert des sich stromaufwärts der Turbine einstellenden Frischdampfdrucks dem entsprechenden Sollwert folgt, wobei dieser Sollwert abhängig von dem Istwert der Frischdampftemperatur stromaufwärts der Turbine ermittelt wird. Hiermit ist dann auch unter Teillast ein wirkungsoptimaler Betrieb der Solaranlage möglich.
Nach einer vorteilhaften Weiterbildung wird hierzu die Frischdampftemperatur mit Hilfe eines Sensors gemessen und der entsprechende Istwert einem Regler bereitgestellt, wobei der Regler abhängig von dem Istwert der Frischdampftemperatur einen Sollwert für den Frischdampfdruck erzeugt und abhängig vom Sollwert für den Frischdampfdruck eine Stellgröße für das oder jedes Ventil derart ermittelt, dass der Istwert des Frischdampfdrucks dem Sollwert für den Frischdampfdruck folgt. Ein solcher Betrieb der Solaranlage mit Hilfe des Reglers erlaubt einen besonders einfachen und bevorzugten, wirkungsgradoptimalen Betrieb einer Solaranlage.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: einen Ausschnitt aus einer Solaranlage; und
- Fig. 2:: ein Diagramm zur Verdeutlichung des erfindungsgemäßen Verfahrens zum Betreiben einer Solaranlage.

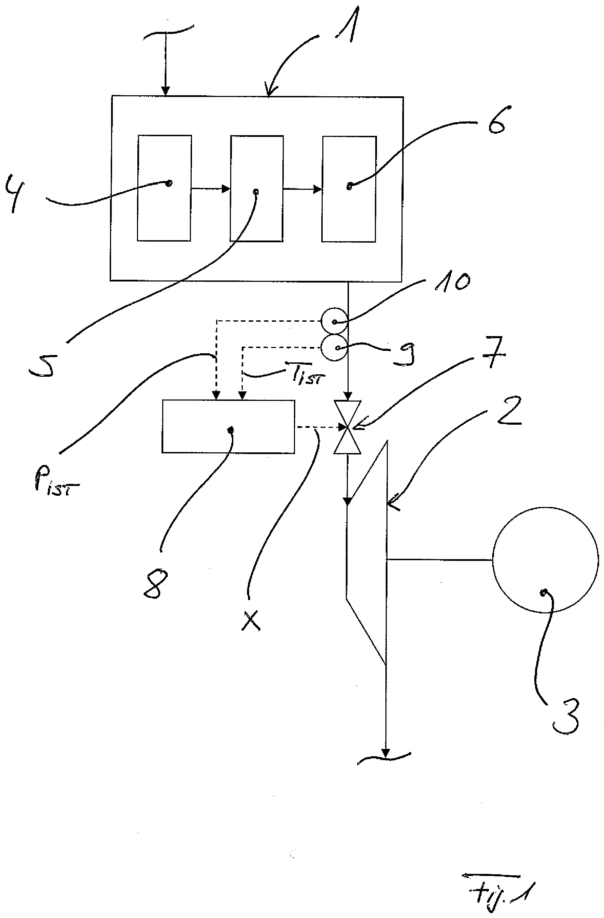

Fig. 1 zeigt einen schematisierten Ausschnitt aus einer Solaranlage, die ein Solarfeld 1, eine Turbine 2 und einen Generator 3 umfasst. Im Solarfeld 1 der Solaranlage wird ein Arbeitsmedium, insbesondere Wasser, verdampft, wobei in dem Solarfeld 1 erzeugter Frischdampf zur Entspannung der Turbine 2 zugeführt wird. Bei der Entspannung des Frischdampfs in der Turbine 2 wird Energie gewonnen, über die der Generator 3 zur Erzeugung elektrischer Energie angetrieben werden kann.

Das Solarfeld 1 der Solaranlage umfasst im gezeigten Ausführungsbeispiel einen Vorwärmer 4, einen Verdampfer 5 und einen Überhitzer 6. Im Vorwärmer 4 wird das Arbeitsmedium auf eine Verdampfungstemperatur vorgewärmt. Im Verdampfer 5 erfolgt die eigentliche Verdampfung des Arbeitsmediums. Im Überhitzer 6 wird der Dampf überhitzt, wobei der Überhitzer 6 den Frischdampf bereitstellt, welcher anschließend der Turbine 2 zur Entspannung desselben zugeführt wird.

Die Menge des der Turbine 2 zur Entspannung zuzuführenden Frischdampfs ist mit Hilfe mindestens eines Ventils 7 einstellbar. Das oder jedes Ventil 7 kann integraler Bestandteil der Turbine 2 sein.

Im Sinne der vorliegenden Erfindung wird zum Betreiben der Solaranlage das oder jedes Ventil 7, über welches die Menge des der Turbine 2 zugeleiteten Frischdampfs eingestellt wird, derart geregelt, dass ein Istwert p_{IST} eines sich stromaufwärts der Turbine 2 einstellenden Frischdampfdrucks p einem entsprechenden Sollwert p_{SOLL} folgt, der abhängig von einem Istwert T_{IST} einer Frischdampftemperatur T des Frischdampfs stromaufwärts der Turbine 2 ermittelt wird.

Vorzugsweise wird das oder jedes Ventil 7 derart geregelt, dass der Istwert p_{IST} des sich unmittelbar stromaufwärts des oder jedes Ventils 7 einstellenden Frischdampfdrucks p dem entsprechenden Sollwert p_{SOLL} folgt, der, wie bereits erwähnt, abhängig von dem Istwert T_{IST} der Frischdampftemperatur des Frischdampfs unmittelbar stromaufwärts des oder jedes Ventils 7 ermittelt wird.

Zur Ausführung des erfindungsgemäßen Verfahrens dient ein Regler 8. Dem Regler 8 wird der Istwert T_{IST} der Frischtemperatur stromaufwärts der Turbine 2 bzw. stromaufwärts des oder jedes Ventils 7 bereitgestellt, wobei dieser Istwert T_{IST} der Frischdampftemperatur mit Hilfe eines Sensors 9 ermittelt wird. Abhängig von diesem Istwert der Frischtemperatur ermittelt der Regler 8 einen Sollwert p_{SOLL} für den Frischdampfdruck des Frischdampfs stromaufwärts der Turbine 2 bzw. stromaufwärts des oder jedes Ventils 7, wobei der Regler 8 abhängig von diesem Sollwert p_{SOLL} für den Frischdampfdruck eine Stellgröße X für das oder jedes Ventil 7 derart ermittelt, dass der Istwert p_{IST} des Frischdampfdrucks dem Sollwert p_{SOLL} für den Frischdampfdruck folgt.

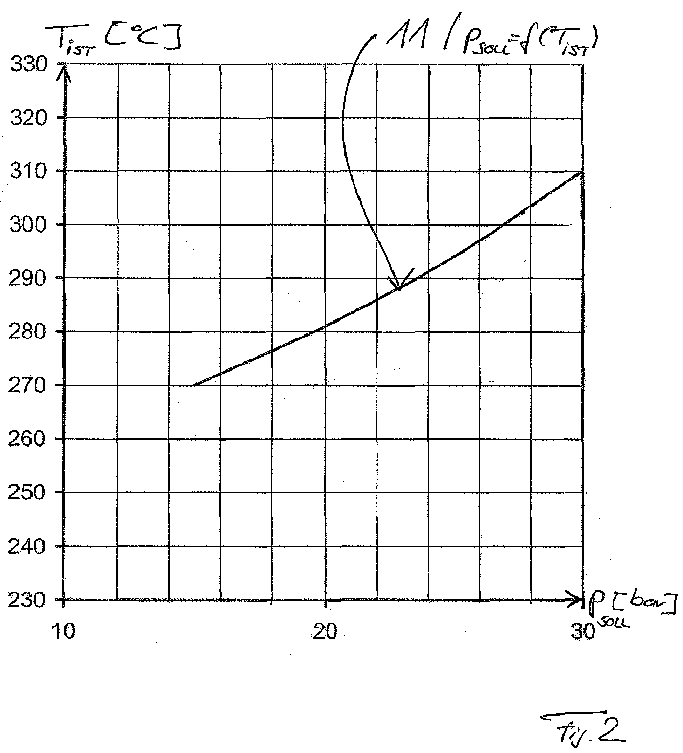

Die Ermittlung des Sollwerts p_{SOLL} für den Frischdampfdruck abhängig von der Ist-Temperatur T_{IST} der Frischdampftemperatur im Regler 8 erfolgt vorzugsweise mit Hilfe einer Kennlinie 7, wobei Figur 2 eine exemplarische Kennlinie 11 zeigt, die der Ermittlung des Sollwerts p_{SOLL} für den Frischdampfdruck abhängig vom Istwert T_{IST} der Frischdampftemperatur dient.

Bei der Kennlinie der Figur 2 wird bei einer Ist-Frischdampftemperatur T_{IST} von in etwa 310°C ein Sollwert für den Frischdampfdruck p_{SOLL} von in etwa 30 bar ermittelt. Bei einer Temperatur T_{IST} des Frischdampfs von in etwa 280°C wird ein Sollwert p_{SOLL} für den Frischdampfdruck von in etwa 19,5 bar erzeugt.

Wie bereits erwähnt, ermittelt der Regler 8 abhängig von dem Sollwert p_{SOLL} für den Frischdampfdruck die Stellgröße X für das oder jedes Ventil 7, sodass der Istwert p_{IST} des Frischdampfdrucks dem Sollwert p_{SOLL} des Frischdampfdrucks folgt, wobei hierzu vorzugsweise die Stellgröße X abhängig von einer Regelabweichung zwischen dem Sollwert p_{SOLL} des Frischdampfdrucks und dem Istwert p_{IST} des Frischdampfdrucks erzeugt wird, wobei gemäß Figur 1 der Istwert p_{IST} des Frischdampfdrucks mit Hilfe eines Sensors 10 ermittelt und dem Regler 8 bereitgestellt wird.

Mit Hilfe der Erfindung ist es möglich, eine Solaranlage sowohl unter Volllast als auch unter Teillast wirkungsgradoptimal zu betreiben. So kann insbesondere dann, wenn infolge einer Beschattung des Solarfelds 1 in demselben weniger Frischdampf erzeugt wird, die Turbine 2 wirkungsgradoptimal betrieben werden, um ein Maximum an elektrischer Energie über den Generator 3 zu erzeugen. Die Erfindung ermöglicht einen Betrieb der Solaranlage mit einer optimalen Kombination aus der zur Verfügung stehenden Menge an Frischdampf, aus dem zur Verfügung stehenden Enthalpiegefälle und einer Belastung der einzelnen Baugruppen der Solaranlage.

### Bezugszeichenliste

- 1: Solarfeld
- 2: Turbine
- 3: Generator
- 4: Vorwärmer
- 5: Verdampfer
- 6: Überhitzer
- 7: Ventil
- 8: Regler
- 9: Sensor
- 10: Sensor
- 11: Kennlinie

## Patentansprüche

1. Verfahren zum wirkungsgradoptimierten Betreiben einer Solaranlage sowohl unter Volllast als auch unter Teillast, wobei die Solaranlage ein Solarfeld (1) mit Direktverdampfung unter Erzeugung von überhitztem Frischdampf, eine Turbine (2) zur Entspannung des Frischdampfs und einen von der Turbine (2) angetrieben Generator (3) zur Erzeugung elektrischer Energie umfasst, wobei der Turbine (2) mindestens ein Ventil (7) zugeordnet ist, über welches die Menge des der Turbine (2) zugeleiteten Frischdampfs eingestellt wird, **dadurch gekennzeichnet, dass** dann, wenn infolge einer Beschattung des Solarfeldes (1) in demselben weniger Frischdampf erzeugt wird, die Turbine (2) derart wirkungsgradoptimal betrieben wird, dass das oder jedes Ventil (7), über welches die Menge des der Turbine (2) zugeleiteten Frischdampfs eingestellt wird, derart geregelt wird, dass ein Istwert eines sich stromaufwärts der Turbine (2) einstellenden Frischdampfdrucks einem Sollwert folgt, der abhängig von einer Frischdampftemperatur des Frischdampfs stromaufwärts der Turbine ermittelt wird.

2. Verfahren nach Anspruch 1, **dadurch gekennzeichnet, dass** das oder jedes Ventil (7), über welches die Menge des der Turbine (2) zugeleiteten Frischdampfs eingestellt wird, derart geregelt wird, dass ein Istwert eines sich stromaufwärts des oder jedes Ventils (7) einstellenden Frischdampfdrucks einem Sollwert folgt, der abhängig von einer Frischdampftemperatur des Frischdampfs stromaufwärts des oder jedes Ventils (7) ermittelt wird.

3. Verfahren nach Anspruch 1 oder 2, **dadurch gekennzeichnet, dass** hierzu ein Istwert der Frischdampftemperatur mit Hilfe eines Sensors (9) gemessen und der entsprechende Istwert einem Regler (8) bereitgestellt wird, wobei der Regler (8) abhängig von dem Istwert der Frischdampftemperatur einen Sollwert für den Frischdampfdruck erzeugt und abhängig vom Sollwert für den Frischdampfdruck eine Stellgröße für das oder jedes Ventil (7) derart ermittelt, dass der Istwert des Frischdampfdrucks dem Sollwert für den Frischdampfdruck folgt.

4. Verfahren nach Anspruch 3, **dadurch gekennzeichnet, dass** der Regler (8) die Stellgröße für das oder jedes Ventil (7) abhängig von einer Regelabweichung zwischen einem von einem Sensor (10) erfassten und dem Regler (8) bereitgestellten Istwert des Frischdampfdrucks und dem Sollwert für den Frischdampfdruck ermittelt.

5. Verfahren nach Anspruch einem der Ansprüche 1 bis **4**, **dadurch gekennzeichnet, dass** der Sollwert für den Frischdampfdruck abhängig von dem Istwert der Frischdampftemperatur über eine Kennlinie (11) ermittelt wird.

## Claims

1. A method for the efficiency-optimised operation of a solar system both under full load and also under part load, wherein the solar system comprises a solar field (1) with direct evaporation producing superheated live steam, a turbine (2) for expanding the live steam and a generator (3) driven by the turbine (2) for generating electric energy, wherein the turbine (2) is assigned at least one valve (7), via which the quantity of the live steam fed to the turbine (2) is adjusted, **characterized in** particular that when as a consequence of a shading of the solar field (1) less live steam is generated in the same, the turbine (2) is efficiency-optimally operated in such a manner that the or each valve (7), via which the quantity of the live steam fed to the turbine (2) is adjusted, is closed-loop controlled in such a manner that an actual value of a live steam pressure materialising upstream of the turbine (2) follows a set point value which is determined dependent on a live steam temperature of the live steam upstream of the turbine.

2. The method according to Claim 1, **characterized in that** the or each valve (7), via which the quantity of the live steam fed to the turbine (2) is adjusted, is closed-loop controlled in such a manner that an actual value of a live steam pressure materialising upstream of the or each valve (7) follows a set point value, which is determined dependent on a live stream temperature of the live stream upstream of the or each valve (7).

3. The method according to Claim 1 or 2, **characterized in that** for this purpose an actual value of the live steam temperature is measured with the help of a sensor (9) and the corresponding actual value supplied to a controller (8), wherein the controller (8), dependent on the actual value of the live steam temperature, generates a set point value for the live steam pressure and dependent on the set point value for the live steam pressure, determines an adjustment variable for the or each valve (7) in such a manner that the actual value of the live steam pressure follows the set point value for the live steam pressure.

4. The method according to Claim 3, **characterized in that** the controller (8) determines the adjustment variable for the or each valve (7) dependent on a control deviation between an actual value of the live steam pressure detected by a sensor (10) and supplied to the controller (8) and the set point value for the live steam pressure.

5. The method according to any one of the Claims 1 to 4, **characterized in that** the set point value for the live steam pressure is determined via a characteristic curve (11) dependent on the actual value of the live steam temperature.

## Revendications

1. Procédé d'exploitation à rendement optimisé d'une installation solaire tant sous charge complète que sous charge partielle, dans lequel l'installation solaire comprend un panneau solaire (1) avec évaporation directe en générant une vapeur fraîche surchauffée, une turbine (2) pour détendre la vapeur fraîche et un générateur (3) entraîné par la turbine (2) pour générer de l'énergie électrique, dans lequel la turbine (2) est coordonnée à au moins une soupape (7), par l'intermédiaire de laquelle la quantité de vapeur fraîche introduite dans la turbine (2) est réglée, **caractérisé en ce que** lorsque moins de vapeur fraîche est générée dans le panneau solaire (1) à la suite d'un ombragement de celui-ci, la turbine (2) est exploitée avec un rendement optimal, de telle sorte que la où chaque soupape (7), par l'intermédiaire de laquelle la quantité de vapeur fraîche introduite dans la turbine (2) est réglée, soit régulée de telle sorte qu'une valeur effective d'une pression de vapeur fraîche s'établissant en amont de la turbine (2) suive une valeur de consigne, qui est déterminée en fonction d'une température de vapeur fraîche de la vapeur fraîche en amont de la turbine.

2. Procédé selon la revendication 1, **caractérisé en ce que** la ou chaque soupape (7), par l'intermédiaire de laquelle la quantité de vapeur fraîche introduite dans la turbine (2) est réglée, est régulée de telle sorte qu'une valeur effective d'une pression de vapeur fraîche s'établissant en amont de la ou de chaque soupape (7) suive une valeur de consigne, qui est déterminée en fonction d'une température de vapeur fraîche de la vapeur fraîche en amont de la ou de chaque soupape (7).

3. Procédé selon la revendication 1 ou 2, **caractérisé en ce que** dans ce but une valeur effective de la température de rapport fraîche est mesurée à l'aide d'un capteur (9) et la valeur effective correspondante est fournie à un régulateur (8), dans lequel le régulateur (8) génère en fonction de la valeur effective de la température de vapeur fraîche une valeur de consigne pour la pression de vapeur fraîche et en fonction de la valeur de consigne pour la pression de vapeur fraîche une grandeur de réglage pour la ou chaque soupape (7) est déterminée de telle sorte que la valeur effective de la pression de vapeur fraîche suive la valeur de consigne pour la pression de vapeur fraîche.

4. Procédé selon la revendication 3, **caractérisé en ce que** le régulateur (8) détermine la grandeur de réglage pour la ou chaque soupape (7) d'un écart de réglage entre une valeur effective de la pression de vapeur fraîche détectée par un capteur (10) et fournie au régulateur (8) et la valeur de consigne pour la pression de vapeur fraîche.

5. Procédé selon une des revendications 1 à 4, **caractérisé en ce que** la valeur de consigne pour la pression de vapeur fraîche est déterminée en fonction de la valeur effective de la température de vapeur fraîche au moyen d'une courbe caractéristique (11).
